# EUROPEAN PATENT APPLICATION

(11) **EP 4 654 057 A1**
(43) Date of publication of application: **26.11.2025**
(21) Application number: 24749697.9
(22) Date of filing: 31.01.2024
(51) Int. Cl.: G06F 21/56, G06N 3/08, G06N 20/00

(54) **METHOD FOR TESTING BACKUP FILE, AND RELATED DEVICE**

(30) Priority: 31.01.2023 CN 202310093402
(71) Applicant: Huawei Technologies Co., Ltd., Shenzhen, Guangdong 518129 (CN)
(72) Inventor: TAN, Feng, Shenzhen, Guangdong 518129 (CN); WANG, Sen, Shenzhen, Guangdong 518129 (CN); ZHANG, Gong, Shenzhen, Guangdong 518129 (CN); CHEN, Renhai, Shenzhen, Guangdong 518129 (CN); HU, Gang, Shenzhen, Guangdong 518129 (CN); SUN, Xiaowei, Shenzhen, Guangdong 518129 (CN); CHEN, Keyun, Shenzhen, Guangdong 518129 (CN)
(74) Representative: Goddar, Heinz J.
(86) International application number: PCT/CN2024/074845
(87) International publication number: WO 2024/160218

(57) **Abstract**

Embodiments of this application disclose a method for detecting a backup file and a related device. The method includes: obtaining an encryption heatmap of each of a plurality of backup files; determining an encryption score of the backup file based on distribution of a target color in the encryption heatmap; constructing a sequence from the encryption score of each backup file, and performing sampling on the sequence by using a sliding window, to obtain a plurality of subsequences; and performing time sequence anomaly detection on the plurality of subsequences, and determining that a backup file corresponding to an encryption score in an abnormal subsequence is ransomware-encrypted. In this way, it can be detected, without parsing the backup file, whether the backup file is ransomware-encrypted.

## Description

This application claims priority to Chinese Patent Application No. CN202310093402.X, filed with the China National Intellectual Property Administration on January 31, 2023 and entitled "METHOD FOR DETECTING BACKUP FILE AND RELATED DEVICE", which is incorporated herein by reference in its entirety.

### TECHNICAL FIELD

Embodiments of this application relate to the computer field, and in particular, to a method for detecting a backup file and a related device.

### BACKGROUND

Ransomware is a type of malware that encrypts user data locally on a user computer based on a strong encryption algorithm such as an AES or RSA algorithm, making it impossible to recover and access the data unless a ransom is paid to obtain a key, and causing extortion. A large-scale outbreak of ransomware brings great harm to enterprises, governments, organizations, and individuals, causing huge economic losses. Therefore, an effective detection technology is urgently needed to identify a ransomware attack, isolate and protect the user data in time, and quickly recover the user data, so as to implement real-time security protection of the user data.

A variety of effective detection technologies may be used to detect whether a regular file has been ransomware-encrypted. Different from the regular file, a backup file is of a binary structure generated by backup software and includes a plurality of regular files stacked in a specific manner, but index data recording the stacking manner is usually recorded in an additional metadata file and coded or encrypted, and cannot be cracked through common reverse engineering. In a conventional technology, a backup software vendor usually needs to parse a backup file to obtain a regular file included in the backup file, and detect whether the regular file has been ransomware-encrypted.

However, how to determine, without parsing the backup file, whether the backup file has been ransomware-encrypted is to be resolved.

### SUMMARY

Embodiments of this application provide a method for detecting a backup file and a related device, to detect, without parsing a backup file, whether the backup file is ransomware-encrypted.

A first aspect of this application provides a method for detecting a backup file:
A backup storage device obtains an encryption heatmap of each of a plurality of backup files, where the encryption heatmap indicates distribution of encrypted data in the backup file by using distribution of a target color; the backup storage device determines an encryption score of the backup file based on the distribution of the target color in the encryption heatmap, where the encryption score indicates a proportion of the encrypted data in the backup file; the backup storage device constructs a sequence from the encryption score of each backup file, and performs sampling on the sequence by using a sliding window, to obtain a plurality of subsequences; and the backup storage device performs time sequence anomaly detection on the plurality of subsequences, and determines that a backup file corresponding to an encryption score in an abnormal subsequence is ransomware-encrypted.

In this application, the encryption heatmap of the backup file can intuitively reflect an encryption status of data in the backup file. Therefore, an encryption score corresponding to the backup file can be accurately obtained based on the encryption heatmap. If no ransomware attack occurs, encryption scores of the backup files are usually low, and high encryption scores are scattered in the sequence. However, if a ransomware attack occurs, a large quantity of backup files in a same directory are ransomware-encrypted at the same time, and the encryption scores of these backup files are high. Therefore, the encryption scores are used to construct a sequence and the sampling is performed by using the sliding window to obtain a plurality of subsequences. Anomal subsequences identified through the time sequence anomaly detection usually have high encryption scores, and this indicates that a ransomware attack has occurred. In this case, it is determined that the backup file corresponding to the encryption score in the abnormal subsequence is ransomware-encrypted. This improves detection accuracy and avoids misjudgment.

In a possible implementation, the encryption heatmap is obtained by the backup storage device by performing the following operations for the backup file:
the backup storage device extracts N pieces of data from the backup file;
the backup storage device performs a randomness test on the N pieces of data to obtain N test values;
the backup storage device constructs an N-dimensional randomness test vector from the N test values;
the backup storage device inputs the randomness test vector into a color coding function to obtain a color vector; and
the backup storage device maps the color vector to a space filling curve to obtain the encryption heatmap.

In this application, the encryption heatmap is obtained in the foregoing manner, to ensure that the encryption heatmap can intuitively reflect an encryption status of data in the backup file, and the backup storage device performs the foregoing operations for the backup file to obtain a corresponding encryption heatmap without consuming resources of another device.

In a possible implementation, the backup storage device receives the encryption heatmap of each of the plurality of backup files from a backup server, where the encryption heatmap is obtained by the backup server by performing the following operations for the backup file:
extracting N pieces of data from the backup file;
performing a randomness test on the N pieces of data to obtain N test values;
constructing an N-dimensional randomness test vector from the N test values;
inputting the randomness test vector into a color coding function to obtain a color vector; and
mapping the color vector to a space filling curve to obtain the encryption heatmap.

In this application, the backup server obtains the encryption heatmap in the foregoing manner, to ensure that the encryption heatmap can intuitively reflect an encryption status of data in the backup file, and resources of the backup storage device do not need to be consumed.

In a possible implementation, the backup storage device determines whether the encryption heatmap of the backup file includes only the target color; and if the encryption heatmap of the backup file includes only the target color, the backup storage device determines the encryption score of the backup file as 1; or if the encryption heatmap of the backup file does not include only the target color, the backup storage device divides the encryption heatmap into M encryption sub-heatmaps, and if Z encryption sub-heatmaps in the M encryption sub-heatmaps include only the target color, the backup storage device determines the encryption score of the backup file as Z/M.

In this application, the encryption score of each backup file is determined in the foregoing manner, so as to ensure that the encryption score can accurately reflect a proportion of the encrypted data in the backup file.

In a possible implementation, the backup storage device determines that the sliding window includes K encryption scores in the sequence, the backup storage device sets the sliding window to slide L encryption scores each time starting from a start position of the sequence, and the backup storage device uses encryption scores included when the sliding window is at the start position as one subsequence, and uses encryption scores included after each sliding of the sliding window as one subsequence.

In a possible implementation, the backup storage device inputs the plurality of subsequences into an isolation forest model, so that the isolation forest model performs time sequence anomaly detection on the plurality of subsequences.

In a possible implementation, the test value is an entropy value, a P value of a chi-square test, or a P value of a bit frequency test.

In a possible implementation, the space filling curve is Hilbert, Z-order, or Grey-code.

A second aspect of this application provides a backup storage device, including:
an obtaining unit, configured to obtain an encryption heatmap of each of a plurality of backup files, where the encryption heatmap indicates distribution of encrypted data in the backup file by using distribution of a target color; and
a processing unit, configured to determine an encryption score of the backup file based on the distribution of the target color in the encryption heatmap, where the encryption score indicates a proportion of the encrypted data in the backup file, where
the processing unit is further configured to construct a sequence from the encryption score of each backup file, and perform sampling on the sequence by using a sliding window, to obtain a plurality of subsequences; and
the processing unit is further configured to perform time sequence anomaly detection on the plurality of subsequences, and determine that a backup file corresponding to an encryption score in an abnormal subsequence is ransomware-encrypted.

In a possible implementation, the encryption heatmap is obtained by the obtaining unit by performing the following operations for the backup file:
the obtaining unit extracts N pieces of data from the backup file;
the obtaining unit performs a randomness test on the N pieces of data to obtain N test values;
the obtaining unit constructs an N-dimensional randomness test vector from the N test values;
the obtaining unit inputs the randomness test vector into a color coding function to obtain a color vector; and
the obtaining unit maps the color vector to a space filling curve to obtain the encryption heatmap.

In a possible implementation,
the obtaining unit is specifically configured to receive the encryption heatmap of each of the plurality of backup files from a backup server, where the encryption heatmap is obtained by the backup server by performing the following operations for the backup file:
extracting N pieces of data from the backup file;
performing a randomness test on the N pieces of data to obtain N test values;
constructing an N-dimensional randomness test vector from the N test values;
inputting the randomness test vector into a color coding function to obtain a color vector; and
mapping the color vector to a space filling curve to obtain the encryption heatmap.

In a possible implementation,
the processing unit is specifically configured to: determine whether the encryption heatmap of the backup file includes only the target color; and if the encryption heatmap of the backup file includes only the target color, determine, by the backup storage device, the encryption score of the backup file as 1; or if the encryption heatmap of the backup file does not include only the target color, divide, by the backup storage device, the encryption heatmap into M encryption sub-heatmaps, and if Z encryption sub-heatmaps in the M encryption sub-heatmaps include only the target color, determine, by the backup storage device, the encryption score of the backup file as Z/M.

In a possible implementation,
the processing unit is specifically configured to determine that the sliding window includes K encryption scores in the sequence;
the processing unit is specifically configured to set the sliding window to slide L encryption scores each time starting from a start position of the sequence; and
the processing unit is specifically configured to use the encryption score included when the sliding window is at the start position as one subsequence, and use the encryption score included after each sliding of the sliding window as one subsequence.

In a possible implementation,
the processing unit is specifically configured to input the plurality of subsequences into an isolation forest model, so that the isolation forest model performs time sequence anomaly detection on the plurality of subsequences.

In a possible implementation, the test value is an entropy value, a P value of a chi-square test, or a P value of a bit frequency test.

In a possible implementation, the space filling curve is Hilbert, Z-order, or Grey-code.

A third aspect of this application provides a backup storage device, where
the backup storage device includes a processor, a memory, an input/output device, and a bus. The processor, the memory, and the input/output device are connected to the bus, and the processor is configured to perform the method according to the first aspect.

A fourth aspect of this application provides a computer-readable storage medium,
including instructions, where when the instructions are run on a computer, the computer is enabled to perform the method according to the first aspect.

A fifth aspect of this application provides a computer program product,
including code, where when the code is run on a computer, the computer is enabled to perform the method according to the first aspect.

### BRIEF DESCRIPTION OF DRAWINGS

FIG. 1a is a diagram of a system architecture to which a method for detecting a backup file is applied according to this application;
FIG. 1b is another diagram of a system architecture to which a method for detecting a backup file is applied according to this application;
FIG. 2 is a schematic flowchart of a method for detecting a backup file according to this application;
FIG. 3 is a schematic flowchart of obtaining an encryption heatmap of a backup file according to this application;
FIG. 4 is a diagram of an encryption heatmap according to this application;
FIG. 5 is a schematic flowchart of obtaining an encryption score based on an encryption heatmap according to this application;
FIG. 6 is a diagram of performing sampling on a sequence by using a sliding window according to this application;
FIG. 7 is a diagram of an abnormal subsequence according to this application;
FIG. 8 is a diagram of a structure of a backup storage device according to this application;
FIG. 9 is another diagram of a structure of a backup storage device according to this application;
FIG. 10 is another diagram of a structure of a backup storage device according to this application; and
FIG. 11 is another diagram of a structure of a backup storage device according to this application.

### DESCRIPTION OF EMBODIMENTS

The following describes embodiments of this application with reference to the accompanying drawings. A person of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances, so that embodiments described herein can be implemented in other orders than the order illustrated or described herein.

Ransomware is one of the most serious threats to Internet security. Therefore, an effective detection technology is urgently needed to identify a ransomware attack, isolate and protect user data in time, and quickly recover the user data, so as to implement real-time security protection of the user data. In recent years, the academic and industrial circles have proposed many ransomware detection methods for platforms such as computer hosts, storage systems, and smartphones from the perspectives of before, during, and after a ransomware attack.

Detection before a ransomware attack and detection during a ransomware attack focus on a ransomware carrier file and dynamic behavior of the ransomware attack. The two cases are separately described below.

Detection of a ransomware carrier file:
Mainstream detection methods are based on static features. The methods rely on scanning and matching of ransomware binary signature features and an update of a signature library by an antivirus engine. For example, "201710942962.2 Ransomware Variant Detection Method Based on Sequence Comparison Algorithm" uses a machine learning method to build a detection model by learning static features of ransomware samples; and "201810744196.3 Ransomware Detection Technology Based on Deep Learning" uses a deep learning technology to combine static features and dynamic features of ransomware for detection. A detection method based on static features has an advantage of fast detection, but cannot cope with code obfuscation technologies or detect unknown ransomware. In addition, for new ransomware without files, that is, ransomware that runs only through malicious command scripts such as PowerShell, a method based on scanning of static features cannot detect existence of ransomware because there is no malicious executable file locally.

Dynamic behavior detection for a ransomware attack:
Executable files of ransomware may be implemented in different ways, but dynamic behavior of ransomware to achieve a ransomware effect is common. Therefore, a detection method based on dynamic behavior gradually becomes the mainstream. Malicious damage behavior of a bait file may be detected by monitoring ransomware, for example, the patent application No. 201610362406.3 "Method and System for Preventing ransomware" and the patent application No. 201710241552.5 "Method and Apparatus for Detecting Malware". Such methods passively rely on ransomware to detect touching of the bait file, which has a disadvantage of detection delay. When the bait file is touched by ransomware, a large quantity of files may be encrypted, and the case in which ransomware evades the detection to copy with reverse detection of the bait file cannot be handled. The detection may be performed by monitoring abnormal operation behavior. For example, in the patent application No. 201710591377.2 "Method, Apparatus, and Method for Identifying Ransomware, and Security Handling Method", the detection is performed by monitoring whether an abnormal behavior operation of a process exceeds an identification threshold on a user computer; in the patent application No. 201811141452.6 "Method for Detecting Windows Encrypted Ransomware Based on Virtual Machine Introspection", an I/O access mode and network activity mode of ransomware in a virtual machine of a user host, however, some ransomware does not communicate with a C&C server of the ransomware and does not have network activities; in the patent application No. 201811653014.8 "Method and System for Quickly Detecting and Preventing Malware", a container environment is built for suspicious programs, and file tampering is detected in the container environment; in the patent application No. 201710660946.4 "Ransomware Detection Method Based on File Status Analysis", an alarm is generated when a total quantity of file content operations, file directory operations, and file addition and deletion operations reaches a threshold; in the patent application No. 201711498634.4 "Method and System for Preventing Ransomware Attack" establishes a file operation reputation database for a process, and behavior matching detection is performed, but the reputation database is updated slowly and cannot cope with unknown ransomware attacks; in the patent application No. 201710822530.8 "Method and System for Defending Against Ransomware Attack", a globally hooked API is used to detect an abnormal change of a bait file, but some ransomware uses a built-in encryption algorithm and does not invoke an operating system to encrypt an API, and it is difficult to effectively distinguish between an encrypted file and a compressed file by using file entropy; and in the patent application No. 201711258009.2 "File Protection Method and Apparatus", ransomware detection is performed by matching a program type in a whitelist with an operated file, but a case in which malicious ransomware code is injected into a whitelisted process cannot be handled.

Detection after a ransomware attack focuses on whether user data is ransomware-encrypted. There are many mature detection technologies for detecting a regular file to determine whether the regular file is ransomware-encrypted. The key is that the regular file has unique structure information, and even in an extreme case in which a file is compressed, a file is encrypted by third-party encryption software, and the like, the structure information is included. For example, a PDF file has a file header and a file trailer, and the file header includes a magic number that identifies the PDF file, for example, 25 50 44 46; a file header of an RAR file includes a magic number that identifies the RAR file, for example, 52 61 72 21 1A 07; and a file header of a docx file includes a magic number that identifies the docx file, for example, 50 4B 03 04. In a backup scenario, a regular file is packed into a backup file by using backup software. However, different from the regular file, the backup file is of a binary structure, and is constructed by stacking a plurality of regular files in a specific manner, but index data recording the stacking manner is usually recorded in an additional metadata file, and is coded or encrypted. As a result, the backup file cannot be cracked through conventional reverse engineering, and a detection technology for the regular file cannot be directly reused on the backup file, and an encryption status inside the backup file cannot be directly determined. In the conventional technology, a backup software vendor usually needs to parse a backup file to obtain a regular file included in the backup file, and detect whether the regular file has been ransomware-encrypted. However, how to determine, without parsing the backup file, whether the backup file has been ransomware-encrypted is to be resolved.

Embodiments of this application provide a method for detecting a backup file and a related device, to detect, without parsing a backup file, whether the backup file is ransomware-encrypted.

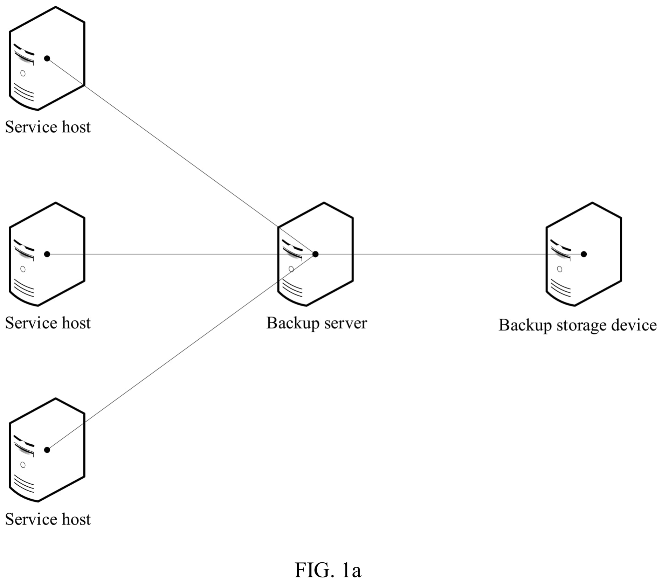

Refer to FIG. 1a. A method for detecting a backup file in this application may be applied to a system architecture shown in FIG. 1a. The system architecture includes a service host, a backup server, and a backup storage device. The service host stores a large amount of user data that exists in a form of a regular file. The backup server is configured to pack a regular file into a backup file by using backup software, and write the backup file into the backup storage device.

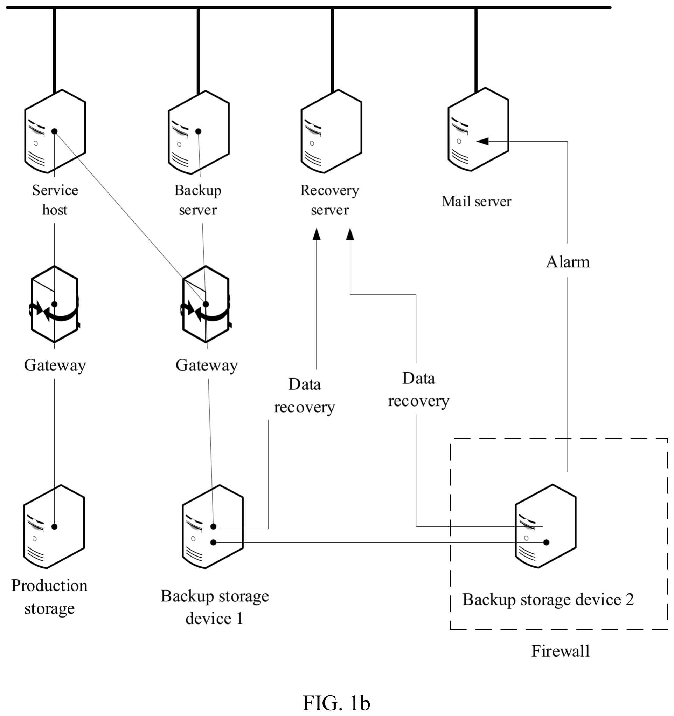

Refer to FIG. 1b. The method for detecting a backup file in this application may also be applied to a system architecture shown in FIG. 1b. The system architecture includes a service host, a backup server, a recovery server, a mail server, a production storage, a gateway, a backup storage device 1, and a backup storage device 2. The production storage receives and stores, by using the gateway, a regular file written by the service host. The backup server obtains the regular file from the service host by using the gateway, packs the regular file into a backup file by using backup software, and writes the backup file into the backup storage device 1 by using the gateway. A backup file stored in the backup storage device 1 may be replicated to the backup storage device 2. Different from the backup storage device 1, the backup storage device 2 is isolated by using a firewall, and is configured with a ransomware anti-virus feature. Backup files stored in the backup storage device 1 and the backup storage device 2 can be sent to the recovery server, and the recovery server recovers the backup files to regular files, and stores the backup files in the production storage, that is, performs data recovery. In addition, if the backup storage device 2 detects a ransomware attack, the backup storage device 2 sends an alarm to the mail server, and the mail server notifies related personnel by using an email.

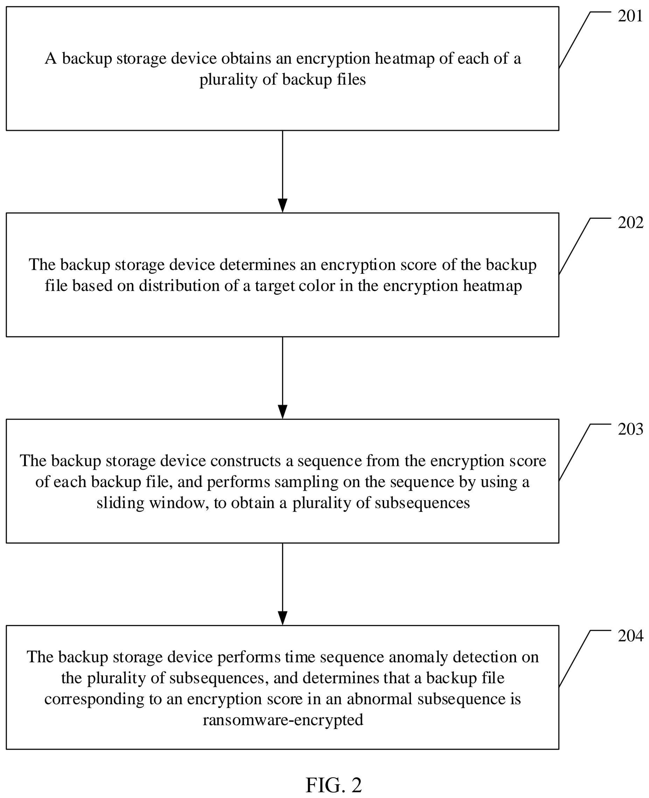

Refer to FIG. 2. The following describes a procedure of a method for detecting a backup file in this application. A backup storage device in this application may be the backup storage device shown in FIG. 1a, or may be the backup storage device 1 or the backup storage device 2 shown in FIG. 1b.

201: The backup storage device obtains an encryption heatmap of each of a plurality of backup files, where the encryption heatmap indicates distribution of encrypted data in the backup file based on distribution of a target color.

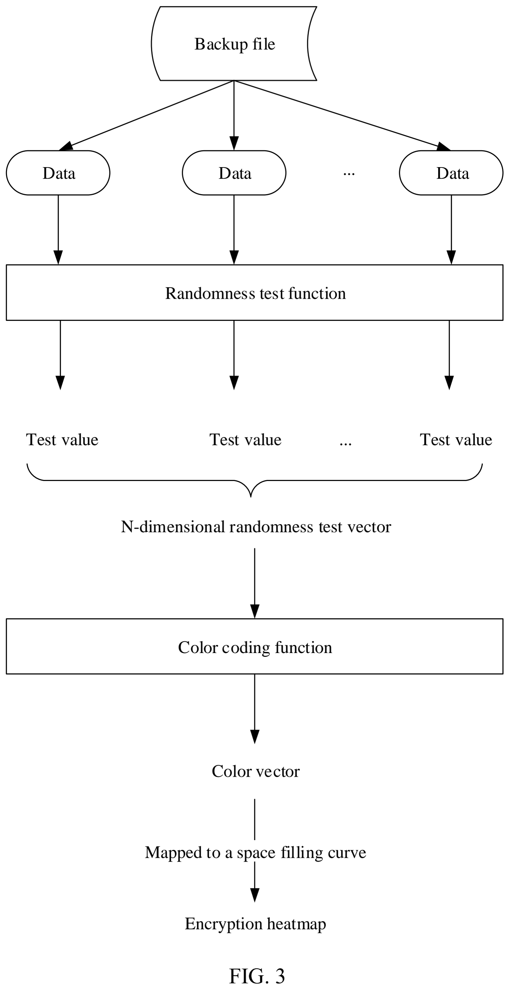

The backup storage device stores a plurality of backup files written by a backup server. Refer to FIG. 3. The backup storage device performs the following operations for each of the plurality of backup files.

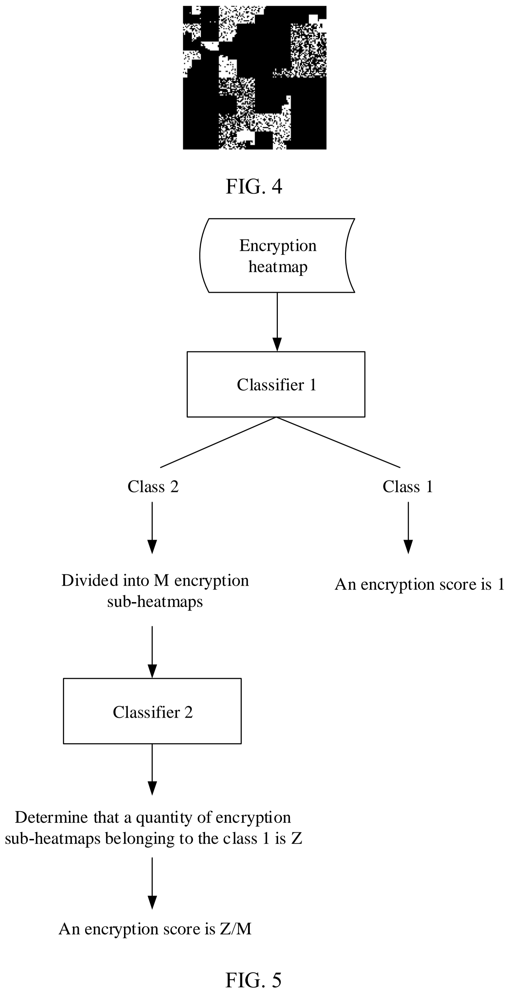

The backup storage device first extracts N pieces of data from the backup file. For example, the backup file is a vblob file of 64 MB; and the backup storage device extracts N points at equal intervals from the backup file, and extracts 32 bytes of data around each point, that is, a total of N pieces of data with each piece a size of 32 bytes is extracted. The backup storage device separately inputs the N pieces of data into a randomness test function to perform a randomness test, to obtain a test value corresponding to each piece of data, that is, obtain a total of N test values. The test value may be, for example, an entropy value, a P value of a chi-square test, or a P value of a bit frequency test. The backup storage device constructs an N-dimensional randomness test vector from the N test values, and inputs the randomness test vector into a color coding function, so that the randomness test vector is expanded into a color vector by the color coding function. The backup storage device maps the color vector to a space filling curve to obtain an encryption heatmap of the backup file. The space filling curve may be, for example, Hilbert, Z-order, or Grey-code. Refer to FIG. 4. In an example, the encryption heatmap includes distribution in black and white. The distribution in black indicates distribution of encrypted data in the backup file, and the distribution in white indicates distribution of unencrypted data in the backup file. Based on the foregoing operations, the backup storage device obtains the encryption heatmap of each of the plurality of backup files.

Certainly, in another implementation, the N test values may also be written by the backup server when the backup server writes the backup file into the backup storage device. Therefore, the backup storage device does not need to obtain the N test values, but directly constructs the N-dimensional randomness test vector from the N test values corresponding to the backup file.

In another implementation, the backup server may obtain encryption heatmaps of the plurality of backup files, and send the encryption heatmaps to the backup storage device. A manner in which the backup server obtains the encryption heatmaps of the plurality of backup files is similar to that described above, and details are not described herein again.

202: The backup storage device determines an encryption score of the backup file based on the distribution of the target color in the encryption heatmap, where the encryption score indicates a proportion of the encrypted data in the backup file.

The backup storage device performs the following operations for the encryption heatmap of each backup file:
the backup storage device determines an encryption score of the backup file corresponding to the encryption heatmap based on the distribution of the target color in the encryption heatmap, where the encryption score indicates a proportion of the encrypted data in the backup file. If the encryption heatmap includes only black, it indicates that the corresponding backup file is encrypted, and therefore the encryption score of the backup file may be set to 1. If black and white are randomly distributed in the encryption heatmap, and an area occupied by white is more scattered, it indicates that the corresponding backup file is more likely to be a normal file, and the encryption score of the backup file is closer to 0. In an example, with reference to FIG. 5, the backup storage device inputs the encryption heatmap into a classifier 1, where the classifier 1 may be an AI model obtained through training, and is used to identify the encryption heatmap to determine whether the encryption heatmap includes only black. If the encryption heatmap includes only black, the encryption heatmap is classified as a class 1, and the backup storage device determines that the encryption score of the backup file corresponding to the encryption heatmap belonging to the class 1 is 1. If the encryption heatmap includes both white and black, the classifier 1 classifies the encryption heatmap as a class 2, and the backup storage device divides the encryption heatmap belonging to the class 2 into M encryption sub-heatmaps, and inputs the M encryption sub-heatmaps into the classifier 2, where the classifier 2 may also be an AI model obtained through training, and is used to identify the encryption sub-heatmap. Similarly, if the encryption sub-heatmap includes only black, the encryption sub-heatmap is classified as the class 1; or if the encryption sub-heatmap does not include only black, the sub-encryption heatmap is classified as the class 2. The backup storage device counts a quantity of encryption sub-heatmaps belonging to the class 1 as Z, and determines that the encryption score of the backup file is Z/M. Based on the foregoing operations, the backup storage device obtains the encryption score of each backup file.

203: The backup storage device constructs a sequence from the encryption score of each backup file, and performs sampling on the sequence by using a sliding window, to obtain a plurality of subsequences.

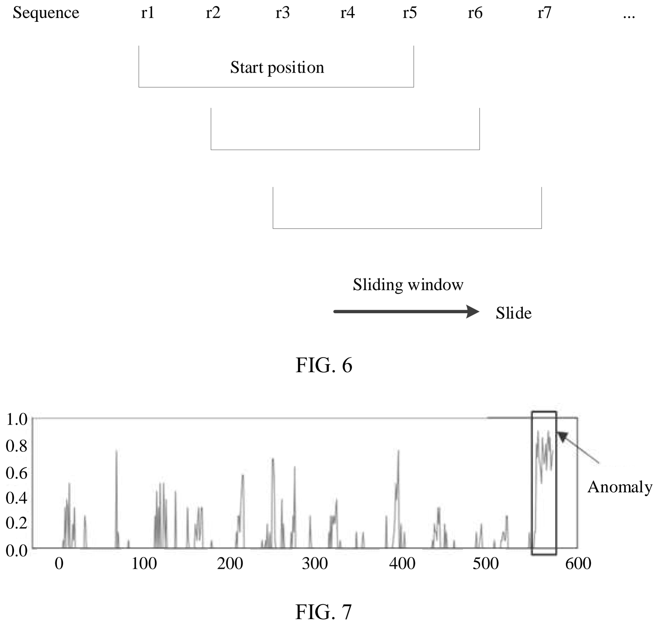

The backup storage device constructs the sequence from the encryption score of each backup file, and performs sampling on the sequence by using the sliding window, to obtain the plurality of subsequences. Refer to FIG. 6. For example, the sequence is [r1, r2, r3, r4, r5, r6, r7...rn-1, rn]. The backup storage device first determines a length of a sliding window, that is, a quantity of encryption scores in the sequence that are included in the sliding window. For example, if the length of the sliding window is 5, the sliding window includes five encryption scores in the sequence. In addition, the backup storage device determines a length of each sliding of the sliding window starting from the start position of the sequence, for example, one encryption score for each sliding, and uses encryption scores included when the sliding window is at the start position as one subsequence, and uses an encryption score included after each sliding of the sliding window as one subsequence. Using FIG. 6 as an example, the encryption scores included when the sliding window is at the start position are [r1, r2, r3, r4, r5], and therefore, the backup storage device uses [r1, r2, r3, r4, r5] as one subsequence; encryption scores included after the sliding window slides for the first time are [r2, r3, r4, r5, r6], and therefore, the backup storage device uses [r2, r3, r4, r5, r6] as one subsequence; and encryption scores included in the sliding window after the second sliding are [r3, r4, r5, r6, r7], and therefore, the backup storage device uses [r3, r4, r5, r6, r7] as one subsequence, and so on.

204: The backup storage device performs time sequence anomaly detection on the plurality of subsequences, and determines that a backup file corresponding to an encryption score in an abnormal subsequence is ransomware-encrypted.

The backup storage device sequentially inputs the plurality of subsequences into a model used for time sequence anomaly detection. The model may be, for example, an isolation forest. The model performs time sequence anomaly detection on each subsequence, determines whether the subsequence is abnormal, and outputs an abnormal subsequence. Refer to FIG. 7. A result shown in FIG. 7 may be obtained based on the foregoing model. In FIG. 7, a horizontal coordinate is a sequence number of a backup file, and a vertical coordinate is an encryption score. For example, an encryption score of a backup file whose sequence number is 1 is r1 in the foregoing sequence, an encryption score of a backup file whose sequence number is 2 is r2 in the foregoing sequence, an encryption score of a backup file whose sequence number is n is rn in the foregoing sequence, and so on. FIG. 7 further indicates an abnormal subsequence. When no ransomware attack occurs, the encryption scores of the backup files are usually low, and high encryption scores are also scattered in the sequence. Therefore, in a possible case, a subsequence [1, 1, 1, 1, 1] is considered as an abnormal subsequence, a subsequence [0, 0, 0, 0, 0] is considered as a normal subsequence, and a subsequence [1, 1, 1, 1, 0.95] is considered as an abnormal subsequence. The backup storage device determines that a backup file corresponding to an encryption score in an abnormal subsequence is ransomware-encrypted. For example, the backup storage device determines that a backup file corresponding to each encryption score in the subsequence [1, 1, 1, 1, 1] is ransomware-encrypted.

In this application, the encryption heatmap of the backup file can intuitively reflect an encryption status of data in the backup file. Therefore, an encryption score corresponding to the backup file can be accurately obtained based on the encryption heatmap. If no ransomware attack occurs, encryption scores of the backup files are usually low, and high encryption scores are scattered in the sequence. However, if a ransomware attack occurs, a large quantity of backup files in a same directory are ransomware-encrypted at the same time, and the encryption scores of these backup files are high. Therefore, the encryption scores are used to construct a sequence and the sampling is performed by using the sliding window to obtain a plurality of subsequences. Anomal subsequences identified through the time sequence anomaly detection usually have high encryption scores, and this indicates that a ransomware attack has occurred. In this case, it is determined that the backup file corresponding to the encryption score in the abnormal subsequence is ransomware-encrypted. This improves detection accuracy and avoids misjudgment.

The foregoing has described the method in this application. The following describes a backup storage device in this application.

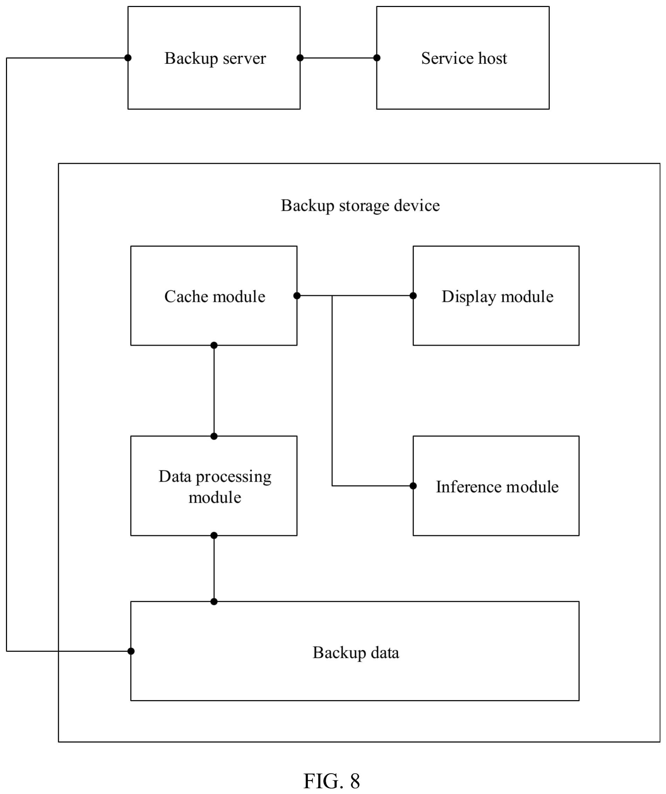

Refer to FIG. 8. A service host and a backup server shown in FIG. 8 are similar to the foregoing description, and the backup server writes a packed backup file into backup data of the backup storage device. The backup storage device in this application includes a data processing module, a cache module, an inference module, and a display module. The data processing module is configured to extract a backup file from locally stored backup data, and obtain an encryption heatmap corresponding to the backup file. A specific obtaining manner is similar to that described above, and details are not described herein again. After obtaining the encryption heatmap, the data processing module sends the encryption heatmap to the cache module. The cache module is configured to store the encryption heatmap, and may also send the encryption heatmap to the inference module. Certainly, related personnel may also view the encryption heatmap in the cache module by using a display interface. The inference module is configured to: obtain an encryption score corresponding to the encryption heatmap, construct a sequence from encryption scores corresponding to a plurality of backup files, perform sliding window sampling on the sequence to obtain a plurality of subsequences, and perform time sequence anomaly detection on the plurality of subsequences, to determine that a backup file corresponding to an encryption score in an abnormal subsequence is ransomware-encrypted. Details are similar to those described above, and details are not described herein again. After determining the ransomware-encrypted backup file, the inference module may further send the information to the display module for display.

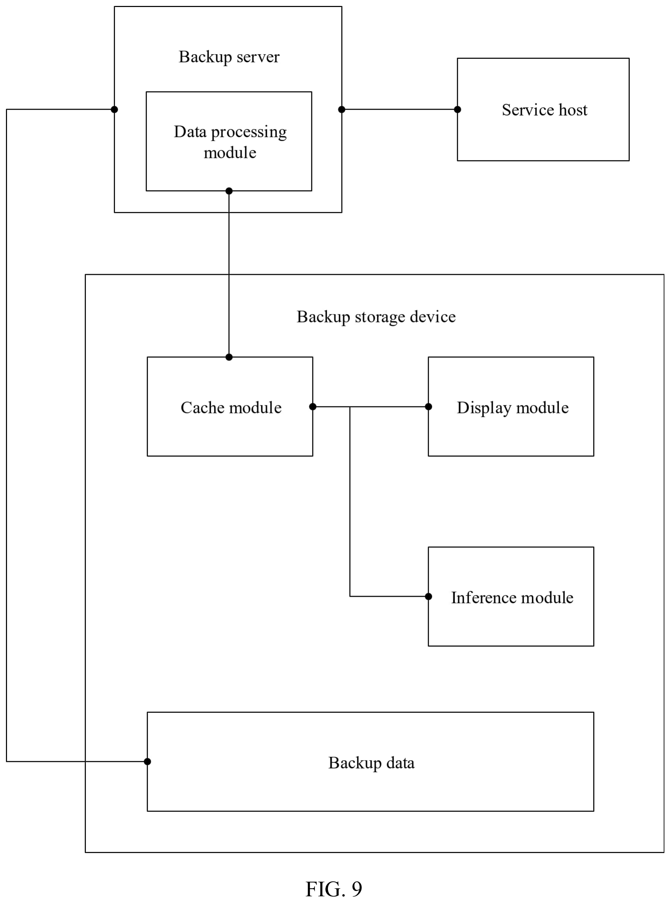

Refer to FIG. 9. In another structure of a backup storage device in this application, the backup storage device includes a cache module, a display module, and an inference module. A service host and the backup server shown in FIG. 9 are similar to those described in FIG. 8, and a difference lies in that the backup server includes a data processing module. The data processing module is configured to obtain an encryption heatmap of a backup file in the backup server, and send the encryption heatmap to the cache module of the backup storage device. The cache module, the inference module, and the display module are similar to those shown in FIG. 8, and details are not described herein again.

In an actual product form, the backup storage device in this application may implement the foregoing functions only by updating corresponding software, or may be connected to an external chip by using a PCIE interface, and the chip implements the foregoing functions.

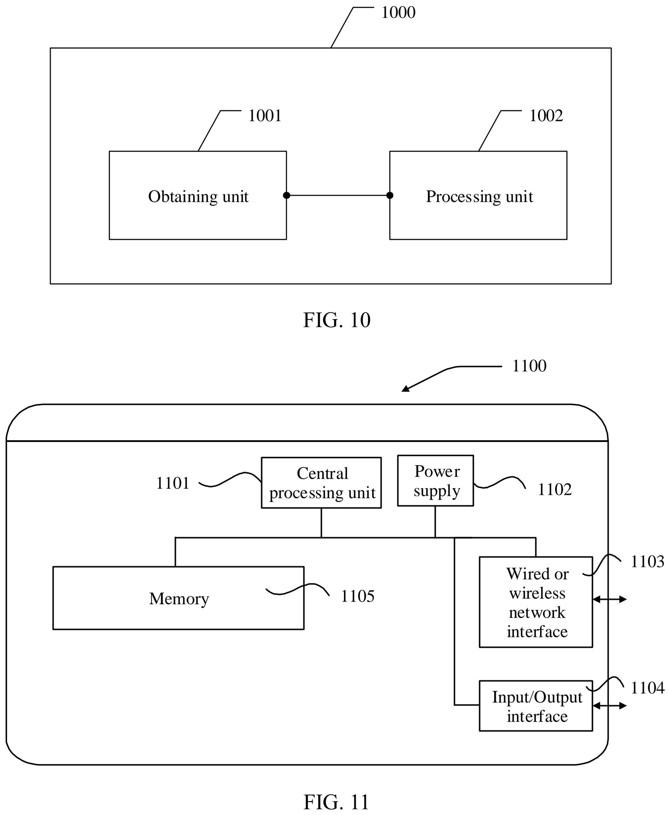

Refer to FIG. 10. A backup storage device 1000 in this application includes an obtaining unit 1001 and a processing unit 1002. The backup storage device 1000 is configured to perform the functions performed by the backup storage device in the foregoing embodiment.

The obtaining unit 1001 is configured to obtain an encryption heatmap of each of a plurality of backup files, where the encryption heatmap indicates distribution of encrypted data in the backup file by using distribution of a target color.

The processing unit 1002 is configured to determine an encryption score of the backup file based on the distribution of the target color in the encryption heatmap, where the encryption score indicates a proportion of the encrypted data in the backup file.

The processing unit 1002 is further configured to construct a sequence from the encryption score of each backup file, and perform sampling on the sequence by using a sliding window, to obtain a plurality of subsequences.

The processing unit 1002 is further configured to perform time sequence anomaly detection on the plurality of subsequences, and determine that a backup file corresponding to an encryption score in an abnormal subsequence is ransomware-encrypted.

In a possible implementation, the encryption heatmap is obtained by the obtaining unit 1001 by performing the following operations for the backup file:
the obtaining unit 1001 extracts N pieces of data from the backup file;
the obtaining unit 1001 performs a randomness test on the N pieces of data to obtain N test values;
the obtaining unit 1001 constructs an N-dimensional randomness test vector from the N test values;
the obtaining unit 1001 inputs the randomness test vector into a color coding function to obtain a color vector; and
the obtaining unit 1001 maps the color vector to a space filling curve to obtain the encryption heatmap.

In a possible implementation,
the obtaining unit 1001 is specifically configured to receive the encryption heatmap of each of the plurality of backup files from a backup server, where the encryption heatmap is obtained by the backup server by performing the following operations for the backup file:
extracting N pieces of data from the backup file;
performing a randomness test on the N pieces of data to obtain N test values;
constructing an N-dimensional randomness test vector from the N test values;
inputting the randomness test vector into a color coding function to obtain a color vector; and
mapping the color vector to a space filling curve to obtain the encryption heatmap.

In a possible implementation,
the processing unit 1002 is specifically configured to: determine whether the encryption heatmap of the backup file includes only the target color; and if the encryption heatmap of the backup file includes only the target color, determine, by the backup storage device, the encryption score of the backup file as 1; or if the encryption heatmap of the backup file does not include only the target color, divide, by the backup storage device, the encryption heatmap into M encryption sub-heatmaps, and if Z encryption sub-heatmaps in the M encryption sub-heatmaps include only the target color, determine, by the backup storage device, the encryption score of the backup file as Z/M.

In a possible implementation,
the processing unit 1002 is specifically configured to determine that the sliding window includes K encryption scores in the sequence;
the processing unit 1002 is specifically configured to set the sliding window to slide L encryption scores each time starting from a start position of the sequence; and
the processing unit 1002 is specifically configured to use the encryption score included when the sliding window is at the start position as one subsequence, and use the encryption score included after each sliding of the sliding window as one subsequence.

In a possible implementation,
the processing unit 1002 is specifically configured to input the plurality of subsequences into an isolation forest model, so that the isolation forest model performs time sequence anomaly detection on the plurality of subsequences.

In a possible implementation, the test value is an entropy value, a P value of a chi-square test, or a P value of a bit frequency test.

In a possible implementation, the space filling curve is Hilbert, Z-order, or Grey-code.

FIG. 11 is a diagram of a structure of a backup storage device according to an embodiment of this application. The backup storage device 1100 may include one or more central processing units (central processing units, CPUs) 1101 and a memory 1105. The memory 1105 stores one or more application programs or data.

The memory 1105 may be a volatile memory or a persistent memory. A program stored in the memory 1105 may include one or more modules, and each module may include a series of instruction operations. Further, the central processing unit 1101 may be configured to communicate with the memory 1105, and perform, on the backup storage device 1100, the series of instruction operations in the memory 1105.

The backup storage device 1100 may further include one or more power supplies 1102, one or more wired or wireless network interfaces 1103, one or more input/output interfaces 1104, and/or one or more operating systems. The central processing unit 1101 may perform the operations performed by the backup storage device in the embodiment shown in FIG. 2, and details are not described herein again.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A method for detecting a backup file, comprising:
obtaining, by a backup storage device, an encryption heatmap of each of a plurality of backup files, wherein the encryption heatmap indicates distribution of encrypted data in the backup file based on distribution of a target color;
determining, by the backup storage device, an encryption score of the backup file based on the distribution of the target color in the encryption heatmap, wherein the encryption score indicates a proportion of the encrypted data in the backup file;
constructing, by the backup storage device, a sequence from the encryption score of each backup file, and performing sampling on the sequence by using a sliding window, to obtain a plurality of subsequences; and
performing, by the backup storage device, time sequence anomaly detection on the plurality of subsequences, and determining that a backup file corresponding to an encryption score in an abnormal subsequence is ransomware-encrypted.

2. The method according to claim 1, wherein the encryption heatmap is obtained by the backup storage device by performing the following operations for the backup file:
extracting, by the backup storage device, N pieces of data from the backup file;
performing, by the backup storage device, a randomness test on the N pieces of data to obtain N test values;
constructing, by the backup storage device, an N-dimensional randomness test vector from the N test values;
inputting, by the backup storage device, the randomness test vector into a color coding function to obtain a color vector; and
mapping, by the backup storage device, the color vector to a space filling curve to obtain the encryption heatmap.

3. The method according to claim 1, wherein obtaining, by the backup storage device, the encryption heatmap of each of the plurality of backup files comprises:
receiving, by the backup storage device, the encryption heatmap of each of the plurality of backup files from a backup server, wherein the encryption heatmap is obtained by the backup server by performing the following operations for the backup file:
extracting N pieces of data from the backup file;
performing a randomness test on the N pieces of data to obtain N test values;
constructing an N-dimensional randomness test vector from the N test values;
inputting the randomness test vector into a color coding function to obtain a color vector; and
mapping the color vector to a space filling curve to obtain the encryption heatmap.

4. The method according to any one of claims 1 to 3, wherein determining, by the backup storage device, the encryption score of the backup file based on the distribution of the target color in the encryption heatmap comprises:
determining, by the backup storage device, whether the encryption heatmap of the backup file comprises only the target color; and if the encryption heatmap of the backup file comprises only the target color, determining, by the backup storage device, the encryption score of the backup file as 1; or if the encryption heatmap of the backup file does not comprise only the target color, dividing, by the backup storage device, the encryption heatmap into M encryption sub-heatmaps, and if Z encryption sub-heatmaps in the M encryption sub-heatmaps comprise only the target color, determining, by the backup storage device, the encryption score of the backup file as Z/M.

5. The method according to claim 4, wherein constructing, by the backup storage device, the sequence from the encryption score of each backup file, and performing sampling on the sequence by using the sliding window, to obtain the plurality of subsequences comprises:
determining, by the backup storage device, that the sliding window comprises K encryption scores in the sequence;
setting, by the backup storage device, the sliding window to slide L encryption scores each time starting from a start position of the sequence; and
using, by the backup storage device, the encryption score comprised when the sliding window is at the start position as one subsequence, and using the encryption score comprised after each sliding of the sliding window as one subsequence.

6. The method according to claim 5, wherein performing, by the backup storage device, time sequence anomaly detection on the plurality of subsequences comprises:
inputting, by the backup storage device, the plurality of subsequences into an isolation forest model, so that the isolation forest model performs time sequence anomaly detection on the plurality of subsequences.

7. The method according to claim 6, wherein the test value is an entropy value, a P value of a chi-square test, or a P value of a bit frequency test.

8. The method according to claim 7, wherein the space filling curve is Hilbert, Z-order, or Grey-code.

9. A backup storage device, comprising:
an obtaining unit, configured to obtain an encryption heatmap of each of a plurality of backup files, wherein the encryption heatmap indicates distribution of encrypted data in the backup file by using distribution of a target color; and
a processing unit, configured to determine an encryption score of the backup file based on the distribution of the target color in the encryption heatmap, wherein the encryption score indicates a proportion of the encrypted data in the backup file, wherein
the processing unit is further configured to construct a sequence from the encryption score of each backup file, and perform sampling on the sequence by using a sliding window, to obtain a plurality of subsequences; and
the processing unit is further configured to perform time sequence anomaly detection on the plurality of subsequences, and determine that a backup file corresponding to an encryption score in an abnormal subsequence is ransomware-encrypted.

10. The backup storage device according to claim 9, wherein the encryption heatmap is obtained by the obtaining unit by performing the following operations for the backup file:
the obtaining unit extracts N pieces of data from the backup file;
the obtaining unit performs a randomness test on the N pieces of data to obtain N test values;
the obtaining unit constructs an N-dimensional randomness test vector from the N test values;
the obtaining unit inputs the randomness test vector into a color coding function to obtain a color vector; and
the obtaining unit maps the color vector to a space filling curve to obtain the encryption heatmap.

11. The backup storage device according to claim 9, wherein
the obtaining unit is specifically configured to receive the encryption heatmap of each of the plurality of backup files from a backup server, wherein the encryption heatmap is obtained by the backup server by performing the following operations for the backup file:
extracting N pieces of data from the backup file;
performing a randomness test on the N pieces of data to obtain N test values;
constructing an N-dimensional randomness test vector from the N test values;
inputting the randomness test vector into a color coding function to obtain a color vector; and
mapping the color vector to a space filling curve to obtain the encryption heatmap.

12. The backup storage device according to any one of claims 9 to 11, wherein
the processing unit is specifically configured to: determine whether the encryption heatmap of the backup file comprises only the target color; and if the encryption heatmap of the backup file comprises only the target color, determine, by the backup storage device, the encryption score of the backup file as 1; or if the encryption heatmap of the backup file does not comprise only the target color, divide, by the backup storage device, the encryption heatmap into M encryption sub-heatmaps, and if Z encryption sub-heatmaps in the M encryption sub-heatmaps comprise only the target color, determine, by the backup storage device, the encryption score of the backup file as Z/M.

13. The backup storage device according to claim 12, wherein
the processing unit is specifically configured to determine that the sliding window comprises K encryption scores in the sequence;
the processing unit is specifically configured to set the sliding window to slide L encryption scores each time starting from a start position of the sequence; and
the processing unit is specifically configured to use the encryption score comprised when the sliding window is at the start position as one subsequence, and use the encryption score comprised after each sliding of the sliding window as one subsequence.

14. The backup storage device according to claim 13, wherein
the processing unit is specifically configured to input the plurality of subsequences into an isolation forest model, so that the isolation forest model performs time sequence anomaly detection on the plurality of subsequences.

15. The backup storage device according to claim 14, wherein the test value is an entropy value, a P value of a chi-square test, or a P value of a bit frequency test.

16. The backup storage device according to claim 15, wherein the space filling curve is Hilbert, Z-order, or Grey-code.

17. A backup storage device, wherein the backup storage device comprises:
a processor, a memory, an input/output device, and a bus, wherein
the processor, the memory, and the input/output device are connected to the bus; and
the processor is configured to perform the method according to any one of claims 1 to 8.

18. A computer-readable storage medium, comprising instructions, wherein when the instructions are run on a computer, the computer is enabled to perform the method according to any one of claims 1 to 8.

19. A computer program product, comprising code, wherein when the code is run on a computer, the computer is enabled to perform the method according to any one of claims 1 to 8.
